# FASCICULE DE BREVET EUROPEEN

(11) **EP 3 990 881 B1**
(45) Date de publication et mention de la délivrance du brevet: **12.07.2023**
(21) Numéro de dépôt: 20747453.7
(22) Date de dépôt: 26.06.2020
(51) Int. Cl.: G01M 3/00

(54) **SURVEILLANCE DE L'ÉTAT D'UN ÉCHANGEUR DANS UN CIRCUIT D'AIR D'UN AÉRONEF**
VERFAHREN UND SYSTEM ZUR ÜBERWACHUNG DES ZUSTANDS EINES WÄRMETAUSCHERS IN EINEM LUFTKREISLAUF EINES FLUGZEUGES
METHOD AND A SYSTEM FOR MONITORING THE STATE OF AN EXCHANGER IN AN AIR CIRCUIT OF AN AIRCRAFT

(30) Priorité: 27.06.2019 FR 1907020
(43) Date de publication de la demande: 04.05.2022
(73) Titulaire: Liebherr-Aerospace Toulouse SAS, 31200 Toulouse (FR)
(72) Inventeur: RIBEIRO, José, 31016 Toulouse Cedex 2 (FR); DUBAELE, Didier, 31016 Toulouse Cedex 2 (FR); CASTELEIN, Alexis, 31016 Toulouse Cedex 2 (FR); CANOUET, Nicolas, 31016 Toulouse Cedex 2 (FR); MOREL, Fanny, 31016 Toulouse Cedex 2 (FR)
(74) Mandataire: Brevalex
(86) Numéro de dépôt international: PCT/FR2020/051117
(87) Numéro de publication internationale: WO 2020/260838

(56) Documents cités:
- FR-A1- 2 978 123
- FR-A1- 2 996 257
- FR-A1- 3 004 422
- FR-A1- 3 038 055
- US-A1- 2010 147 399

## Description

### Domaine technique

La présente invention concerne un procédé et un système de surveillance de l'état d'un échangeur thermique dans un circuit d'air d'un aéronef et plus particulièrement, l'état et le niveau de fuite de l'échangeur thermique air/air du circuit.

### Etat de la technique antérieure

Le circuit d'air dans un aéronef comprend un échangeur thermique destiné à refroidir l'air extrait d'un moteur de l'aéronef par un système de prélèvement d'air. Plus particulièrement, le système de prélèvement est connecté au compresseur du moteur via une vanne de régulation de pression PRV (Pressure Regulating Vanne) qui sert aussi à isoler le circuit d'air. Cette vanne PRV est disposée en amont de l'échangeur et assure la régulation de la pression de la source d'air chaud venant du moteur. En effet, la direction du flux d'air va du moteur vers l'échangeur et ensuite vers des dispositifs utilisant de l'air comprimé appelés consommateurs. Ces derniers fournissent de l'air conditionné pour la cabine ainsi que de l'air comprimé de dégivrage pour les ailes et d'autres structures et systèmes de l'aéronef.

Le circuit d'air comporte également une boucle de contrôle de température comprenant une sonde de température disposée à la sortie de l'échangeur ainsi qu'une vanne FAV (Fan Air Valve) de régulation de l'air frais traversant l'échangeur d'air. La boucle de contrôle est configurée pour moduler l'air frais mélangé au niveau de l'échangeur en fonction de la température mesurée par la sonde.

Actuellement, la détection des fuites d'air chaud autour des échangeurs air/air et des tuyaux d'air pressurisés se fait via une boucle de détection de fuites. Cette boucle de détection comprend des fils longeant les tuyaux du circuit d'air ainsi que des capteurs de détection de fuite disposés entre l'échangeur et les zones à protéger du flux de fuite d'air chaud pouvant résulter de cette fuite. Dès lors qu'une fuite est détectée, la source d'air chaud est automatiquement isolée par la fermeture de la vanne PRV prévenant ainsi tout dommage sur la structure de l'aéronef.

Ce mode de détection de fuite protège efficacement l'aéronef quand la fuite devient trop importante. Toutefois, il ne permet pas d'anticiper la maintenance et peut, par conséquent, induire des temps d'indisponibilités de l'aéronef. D'autres exemples de procédés et de système de surveillance de l'état d'un échangeur thermique dans un circuit d'air d'aéronef sont décrits par les documents US2010/147399 ou FR2978123.

L'objet de la présente invention est par conséquent de proposer un système de surveillance d'un circuit d'air d'un aéronef remédiant aux inconvénients précités, en particulier, en exploitant au mieux les mesures sur le circuit d'air pour déterminer son état et prédire le niveau de fuite afin d'anticiper les maintenances.

### Présentation de l'invention

L'invention concerne un procédé de surveillance de l'état d'un échangeur thermique dans un circuit d'air d'un aéronef, selon la revendication 1, ledit échangeur thermique étant destiné à refroidir l'air extrait d'une source d'air chaud principale de l'aéronef, ledit procédé comportant les étapes suivantes :
- acquisition des mesures de température relevées par une sonde disposée à une sortie dudit échangeur thermique, ladite acquisition étant réalisée lorsque le circuit d'air est alimenté par une source d'air chaud secondaire en aval dudit échangeur thermique et la source d'air chaud principale étant coupée,
- sélection d'une mesure de température pertinente parmi lesdites mesures de température ladite mesure de température pertinente étant représentative d'une phase de stabilisation comprise dans une période de temps d'observation prédéterminée,
- comparer ladite mesure de température pertinente à un seuil d'alerte, et
- évaluer un niveau de fuite dans l'échangeur thermique en fonction de ladite comparaison.

Ce procédé permet de prédire le niveau de fuite et d'anticiper la dépose de l'échangeur avant que le niveau de fuite soit important. Cette dépose peut alors être réalisée lors des phases de maintenance programmées à l'avance évitant ainsi des indisponibilités non prévues de l'aéronef.

Avantageusement, ladite période de temps d'observation déterminée est déterminée par une analyse statistique sur une population d'aéronefs comportant des échangeurs présentant des fuites significatives.

Ceci permet d'optimiser la période d'observation en sélectionnant la plus courte durée possible afin de minimiser le volume de données à traiter tout en permettant la discrimination entre les différentes populations d'échangeurs.

Avantageusement, la mesure de température pertinente est sélectionnée par un filtrage statistique, ledit filtrage statistique étant adapté pour sélectionner la mesure de température la plus représentative de ladite phase de stabilisation comprise dans ladite période de temps d'observation prédéterminée.

Selon un mode de réalisation de l'invention, ladite période de temps d'observation présente une durée entre environ 3 minutes et 10 minutes. Ainsi, la durée d'observation est un compromis entre rapidité de traitement et précision.

Avantageusement, le processeur est configuré pour standardiser ladite mesure de température pertinente avant de la comparer au seuil d'alerte, ladite standardisation étant réalisée en supprimant la dépendance de la mesure de température pertinente vis-à-vis du contexte extérieur.

Ainsi, les mesures de température standardisées peuvent être considérées comme étant des observations acquises dans des conditions identiques pour chaque vol de l'aéronef.

Avantageusement, le contexte extérieur est identifié par une mesure de la température d'air extérieure et une mesure de la température en sortie de la source d'air chaud secondaire. Ceci permet de comparer différents vols entre eux quelle que soit la température extérieure.

Avantageusement, le seuil d'alerte est basé sur une valeur théorique de la température d'air à la sortie de l'échangeur estimée par un modèle thermique prédéterminé, ledit modèle thermique étant construit à partir d'une analyse statistique d'une série de mesures réelles de températures d'air à la sortie de chacun d'une pluralité d'échangeurs d'une flotte d'aéronefs ainsi que de températures correspondantes de l'air extérieur et des sources d'air chaud secondaires.

Le seuil d'alerte permet de garder l'échangeur le plus longtemps possible sur l'aéronef tout en garantissant l'absence d'impacts sur les performances de l'aéronef ou de risques de pannes qui pourraient bloquer ce dernier au sol.

Selon un mode de réalisation de l'invention, le seuil d'alerte est une valeur sélectionnée entre environ 100°C et 150°C.

Avantageusement, le processeur est configuré pour estimer le niveau de fuite et établir un pronostic de défaillance de l'échangeur par un apprentissage automatique basé sur un modèle de vieillissement construit préalablement sur une série de données issues d'une pluralité de vols d'une même flotte d'aéronefs.

Selon une particularité de l'invention, la source d'air chaud secondaire en aval dudit échangeur est un groupe auxiliaire de puissance APU. Par ailleurs, la source d'air chaud principale en amont dudit échangeur est un moteur d'aéronef, l'air chaud étant extrait dudit moteur d'aéronef par un système de prélèvement d'air moteur.

Selon encore une particularité de l'invention, la sonde de température fait partie d'une boucle de contrôle destinée à réguler la température d'un mélange d'air frais et d'air chaud utilisée afin de maintenir une température d'air constante à la sortie de l'échangeur.

Avantageusement, le système de surveillance comporte une interface d'affichage pour visualiser des représentations graphiques des températures mesurées, et/ou des niveaux de fuites et/ou des pronostics de défaillance.

Ceci donne des renseignements sur les tendances, anomalies ou ruptures relatives aux échangeurs.

L'invention vise également un système de surveillance de l'état d'un échangeur thermique dans un circuit d'air d'un aéronef, selon la revendication 13, ledit échangeur thermique étant destiné à refroidir l'air extrait d'une source d'air chaud principale de l'aéronef, ledit système comportant :
- un module d'acquisition configuré pour acquérir des mesures de température relevées par une sonde disposée à une sortie dudit échangeur thermique, ladite acquisition étant réalisée lorsque le circuit d'air est alimenté par une source d'air chaud secondaire en aval dudit échangeur thermique et la source d'air chaud principale étant coupée,
- un processeur configuré pour sélectionner une mesure de température pertinente parmi lesdites mesures de température et pour détecter une éventuelle fuite dans l'échangeur thermique en comparant la mesure de température pertinente à un seuil d'alerte prédéterminé, ladite mesure de température pertinente étant représentative d'une phase de stabilisation comprise dans une période de temps d'observation prédéterminée.

D'autres caractéristiques et avantages de l'invention apparaîtront à la lecture d'un mode de réalisation préférentiel de l'invention, décrit en référence aux figures jointes parmi lesquelles :
[Fig. 1] illustre de manière schématique un système de surveillance de l'état d'un échangeur dans un circuit d'air d'un aéronef, selon un mode de réalisation de l'invention ;
[Fig. 2A] et [Fig. 2B] illustrent de manière schématique un procédé de surveillance de l'état d'un circuit d'air dans un aéronef, selon un mode de réalisation préféré de l'invention ;
[Fig. 3] est un graphe illustrant de manière schématique une courbe représentant le suivi de la température de l'air mesurée en aval de l'échangeur, selon un mode de réalisation de l'invention.

### Description des modes de réalisation

La présente invention concerne les échangeurs thermiques de refroidissement air/air intégrés dans une architecture où la régulation et le contrôle de la température des flux d'airs sont réalisés grâce à une sonde de température en aval du flux d'air chaud. Le concept à la base de l'invention est de caractériser la fuite d'un échangeur thermique air/air d'un aéronef par la mesure de température à la sortie de l'échangeur lorsque le circuit d'air est dans une configuration prédéterminée.

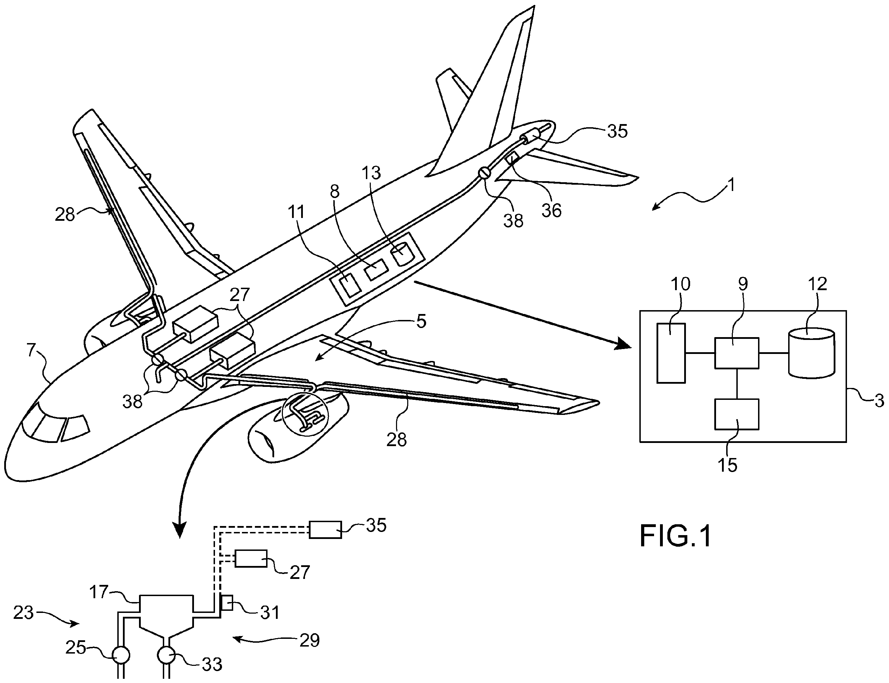

La [Fig. 1] illustre de manière schématique un système de surveillance de l'état d'un circuit d'air et plus particulièrement d'un échangeur thermique dans le circuit d'air d'un aéronef, selon un mode de réalisation de l'invention.

Le système de surveillance 1 comporte un ordinateur 3 destiné à acquérir et traiter des données relatives à un circuit d'air 5 de l'aéronef 7. L'ordinateur 3 comprend un processeur 9, une interface d'entrée 10, une mémoire 12 et une interface d'affichage 15. La mémoire 13 forme un support d'enregistrement lisible par le processeur 9 et sur lequel est enregistré un ou plusieurs programme(s) d'ordinateur comportant des codes d'instructions pour l'exécution du procédé de surveillance de l'état du circuit d'air 5 dans l'aéronef 7, selon un mode de réalisation de l'invention.

L'ordinateur 3 du système de surveillance 1 est installé dans un centre de surveillance et/ou de maintenance au sol. En outre, le système de surveillance 1 comporte un contrôleur 8 du circuit d'air, un module d'acquisition 11 et un module d'enregistrement 13 disposés dans l'aéronef 7.

Le circuit d'air 5 comprend un échangeur thermique air/air 17 « PCE » (Pre-Cooler) destiné à refroidir l'air extrait d'un moteur 21 de l'aéronef 7 par un système de prélèvement d'air moteur 23. Ce système de prélèvement d'air moteur 23 est connecté au moteur 21 via une vanne de régulation de pression 25 « PRV » disposée en amont de l'échangeur thermique 17. La température au niveau du système de prélèvement d'air moteur 23 varie en général dans une plage entre 150°C et 250°C. La vanne PRV de régulation de pression 25 assure la régulation de la pression ainsi que l'isolation de la source d'air chaud venant du moteur 21. En effet, en temps normal, le sens du flux d'air va de la source de pression (i.e. source d'air chaud du moteur 21) vers les systèmes consommateurs 27, 28 utilisant de l'air comprimé. Cette source d'air chaud 21 peut être coupée ou isolée par la fermeture de la vanne de régulation de pression 25 PRV.

En outre, le circuit d'air 5 comporte une boucle de contrôle 29 de température comprenant une sonde 31 de température disposée à la sortie de l'échangeur thermique 17 ainsi qu'une vanne FAV de régulation de l'air frais 33 traversant l'échangeur thermique 17. La vanne FAV 33 est destinée à moduler l'air frais mélangé au niveau de l'échangeur thermique 17 en fonction de la température mesurée par la sonde 31. La température régulée de l'air dans les canaux du circuit 5 varie dans une plage entre 150°C et 250°C. La boucle de contrôle 29 permet ainsi de maintenir une température d'air constante à la sortie de l'échangeur thermique 17 d'où on récupère de l'air pour les consommateurs 27, 28 (air conditionné 27 pour la cabine ainsi que de l'air de dégivrage 28 pour la voilure, etc.).

Conformément à l'invention, le système de surveillance 1 conjugue la mesure de température en aval de l'échangeur thermique 17 à des modes opératoires spécifiques. Plus particulièrement, l'état du circuit d'air 5 est surveillé en mesurant la température à la sortie de l'échangeur 17 lorsque le circuit d'air 5 est mis dans une configuration ou mode opératoire spécifique utilisé comme une phase d'observation. Ce mode opératoire spécifique est réalisé en isolant le circuit d'air 5 de la source d'air chaud principale (i.e. le moteur 21) et en alimentant le circuit d'air 5 par une source d'air chaud secondaire 35 en aval de l'échangeur 17. Dans un avion, la source d'air chaud secondaire 35 peut être un groupe auxiliaire de puissance APU (Auxiliary Power Unit) positionné en général à l'arrière de l'avion 7. L'APU est un turbogénérateur destiné à produire de l'énergie à bord de l'avion 7 quand les moteurs principaux 21 sont à l'arrêt et sert également à démarrer ces derniers. Par ailleurs, le circuit d'air 5 comporte également d'autres vannes d'isolations 38 permettant d'isoler l'une ou l'autre des sources d'air chaud primaire 21 et secondaire 35.

On notera que le mode opératoire spécifique du circuit d'air 5 permet de contourner la boucle fermée de régulation formée par la source principale d'air chaud 21, l'échangeur thermique 17 et la sonde 31. Ce contournement permet de mesurer une température non régulée et donc représentative d'une éventuelle fuite d'air.

Plus particulièrement, lorsque le circuit d'air 5 se trouve dans le mode opératoire spécifique, le module d'acquisition 11 disposé dans l'aéronef 7 est configuré pour acquérir des mesures de température relevées par la sonde 31 disposée à la sortie de l'échangeur 17. Ces mesures de température sont enregistrées dans le module d'enregistrement 13 disposé dans l'aéronef 7.

En outre, le module d'acquisition 11 est configuré pour acquérir des mesures de température de l'air chaud secondaire relevées par une sonde 36 disposée à la sortie de la source d'air chaud secondaire 35 ou à l'entrée des packs de conditionnement d'air 27 ainsi que des mesures de température de l'air extérieur relevées par une sonde (non illustrée) disposée à l'extérieur de l'aéronef. Ces mesures de température à la sortie de la source d'air chaud secondaire et de l'air extérieur sont également enregistrées dans le module d'enregistrement 13 de l'aéronef 7.

Toutes les mesures de température sont récupérées par le système de surveillance au sol. Plus particulièrement, les données relatives à ces mesures sont acquises par le processeur 9 via l'interface d'entrée 10.

Le processeur 9 est configuré pour sélectionner une mesure de température pertinente par vol parmi toutes les mesures de température récupérées depuis le module d'enregistrement 13 de l'aéronef. En outre, le processeur 9 est configuré pour détecter une éventuelle fuite dans le circuit d'air 5 et plus particulièrement, dans l'échangeur thermique 17 en comparant la mesure de température pertinente à un seuil d'alerte prédéterminé. Selon le résultat de cette comparaison, le processeur 9 détermine en outre le niveau de fuite dans l'échangeur thermique 17 permettant par conséquent de prévenir les maintenances sur le circuit d'air 5 et éventuellement d'anticiper la dépose de l'échangeur 17 avant que le niveau de fuite soit important.

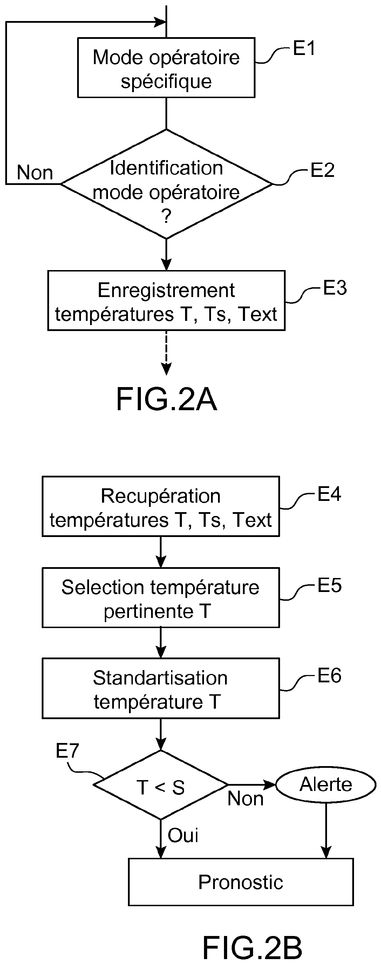

Les figures 2A et 2B illustrent de manière schématique un procédé de surveillance de l'état d'un circuit d'air dans un aéronef, selon un mode de réalisation préféré de l'invention.

Plus particulièrement, la figure 2A concerne les étapes de surveillance dans l'aéronef tandis que la figure 2B concerne ceux réalisés au sol.

A l'étape E1, le circuit d'air 5 est préparé pour être mis dans un mode opératoire spécifique consistant à l'isoler de la source d'air chaud principale 21 et à l'alimenter par la source d'air chaud secondaire 35 en aval de l'échangeur 17.

L'étape E2 est un test pour vérifier que le circuit d'air 5 est bien dans le mode opératoire spécifique de la phase d'observation. Plus particulièrement, le contrôleur 8 du circuit d'air dans l'aéronef est configuré pour identifier le mode opératoire spécifique sur des critères de position des vannes (par exemple, PRV, FAV) disposées dans le circuit 5 en amont et en aval de l'échangeur 17 et de la sonde 31 de température. Si le test confirme que la vanne PRV 25 est bien fermée et que le circuit d'air 5 est alimenté par la source d'air chaud secondaire 35, alors on passe à l'étape suivante pour démarrer l'enregistrement des mesures de température. Sinon, on reboucle sur l'étape E1 pour remettre le circuit d'air 5 dans le mode opératoire spécifique et revérifier cette configuration.

A l'étape E3, on se trouve dans la phase d'observation durant laquelle les températures T lues par la sonde 31 à la sortie de l'échangeur 17 sont enregistrées dans le module d'enregistrement 13 de l'aéronef. Ces températures sont représentatives d'une éventuelle fuite d'air ainsi que de l'état ou niveau de la fuite.

On notera que lorsque le circuit d'air 5 est alimenté par la source d'air chaud secondaire 35 en aval de l'échangeur 17 et de la sonde 31 de température (i.e. vanne PRV 25 fermée), un flux d'air chaud s'établit entre cette source d'air 35 et les consommateurs 27. Dans ce cas, la sonde 31 de température en aval de l'échangeur 17 va mesurer une température statique correspondant à la température de l'air résultante du refroidissement de l'air à l'intérieur des canaux par l'échange thermique avec l'air ambiant. Lorsque l'échangeur thermique 17 commence à fuir, un flux d'air chaud va par conséquent, se créer entre cette source d'air et l'extérieur. La température de ce flux d'air chaud va alors être mesurée par la sonde 31 de température en aval de l'échangeur 17 donnant ainsi une indication du niveau de fuite.

Plus particulièrement, lors de chaque phase d'observation, le module d'acquisition 11 est configuré pour acquérir, pendant une période de temps prédéterminée, les mesures de température relevées par la sonde 31 disposée à la sortie de l'échangeur 17. Cette période de temps est avantageusement déterminée par une analyse statistique sur une population d'aéronefs comportant des échangeurs présentant des fuites significatives. La durée de cette période est optimisée pour être la plus courte possible tout en permettant de discriminer les différentes populations d'échangeurs. A titre d'exemple, la période de temps d'observation est une durée comprise entre environ 3 minutes et 10 minutes. Ceci est un bon compromis entre rapidité de traitement et précision du résultat.

En outre, toujours lors de la phase d'observation, la température Tₛ à la sortie de la source d'air chaud secondaire 35 et la température Tₑₓₜ de l'air extérieur relevées par les sondes disposées respectivement à la sortie de la source d'air chaud secondaire et à l'extérieure de l'aéronef sont également enregistrées dans le module d'enregistrement 13 de l'aéronef.

A l'étape E4 (Figure.2B), les mesures de températures à la sortie de l'échangeur 17, à la sortie de la source d'air chaud secondaire 35 et de l'air extérieur sont récupérées au sol depuis le module d'enregistrement 13 de l'aéronef via l'interface d'entrée 10.

A l'étape E5, le processeur 9 est configuré pour sélectionner une mesure de température pertinente T par vol parmi toutes les mesures de température lues à la sortie de l'échangeur. Le processeur 9 met en oeuvre un filtrage statistique pour sélectionner la mesure de température la plus représentative d'une phase de stabilisation comprise dans la période de temps d'observation prédéterminée. Le filtrage statistique permet de sélectionner la mesure de température pertinente à un instant précis après le début de la phase de stabilisation.

A l'étape E6, le processeur 9 est configuré pour standardiser la valeur de la température pertinente mesurée à la sortie de l'échangeur thermique 17.

En effet, la température mesurée en aval de l'échangeur 17 peut être dépendante du contexte extérieur. Cette dépendance ne permet pas de comparer avec précision des mesures de fuites réalisées selon des contextes extérieurs différents. La standardisation supprime la dépendance de la mesure de température en aval de l'échangeur vis-à-vis du contexte extérieur. On notera que le contexte extérieur peut comprendre la température extérieure, la température à la sortie de la source d'air chaud secondaire, la pression extérieure, l'altitude, le lieu de vol (au-dessus de la mer, le désert, la terre, etc.), les conditions météo (pluie, neige, gel, etc.), l'hygrométrie, la vitesse relative de l'aéronef, etc. Toutefois, la température extérieure et la température à la sortie de la source d'air chaud secondaire forment le contexte le plus pertinent car leur impact sur la température au niveau du circuit d'air 5 est le plus important. Ainsi, les effets des autres conditions peuvent être négligés sans compromettre la précision de l'évaluation du niveau de fuite d'air facilitant ainsi le traitement des données. Autrement dit, il est suffisant d'identifier le contexte extérieur par la température d'air extérieure et la température à la sortie de la source d'air chaud secondaire.

La standardisation repose en particulier sur une normalisation des mesures de la température à la sortie de l'échangeur 17 et peut être réalisée en construisant au préalable un modèle statistique à partir d'une série de mesures sur une population d'échangeurs neufs.

A titre d'exemple, le modèle statistique peut être réalisé selon un modèle général de régression linéaire défini sur les mesures de la température de l'air extérieure et de la température à la sortie de la source d'air chaud secondaire.

Une autre technique de standardisation plus précise consiste à créer de manière connue des modes de normalisations multivariés en fonction des températures de l'air extérieur et de la température à la sortie de la source d'air chaud secondaire à partir d'algorithmes de compression comme l'ACP (Analyse en composantes principales).

En variante, le modèle statistique peut être un modèle de normalisation très simple construit en calculant la moyenne et l'écart-type sur la série de mesures de températures d'air à la sortie de chaque échangeur neuf. Dans ce cas, la standardisation d'une mesure courante de température à la sortie d'un échangeur lue par la sonde 31 de température consiste à calculer la différence entre la mesure lue et la moyenne du modèle statistique, et puis à diviser la différence par l'écart-type du modèle. Les mesures standardisées de la température à la sortie des échangeurs peuvent alors être considérées comme étant des observations acquises dans des conditions identiques pour chaque vol de l'aéronef.

L'étape E7 est un test de détection pendant lequel le processeur 9 est configuré pour comparer, à la fin de la période de temps prédéterminée, la mesure pertinente standardisée de température à la sortie de l'échangeur 17 à un seuil d'alerte S prédéterminé.

Le seuil d'alerte S est basé sur une valeur théorique de la température d'air à la sortie de l'échangeur 17 estimée par un modèle thermique prédéterminé. Ce modèle thermique est construit lors de deux phases d'observations préalables à partir d'une analyse statistique sur des séries de mesures réelles de températures d'air à la sortie de chacun d'une pluralité d'échangeurs ainsi que des mesures correspondantes de températures de l'air extérieur et des sources d'air chauds secondaires.

La première phase d'observation préalable est effectuée sur une population d'aéronefs comportant des échangeurs présentant des fuites significatives. En effet, cette première phase d'observation préalable est la même que celle utilisée à l'étape E3, pour la détermination de la période de temps prédéterminée.

Par ailleurs, la deuxième phase d'observation préalable est effectuée sur une population d'aéronefs comportant des échangeurs ne présentant pas de fuite. Par exemple sur une flotte d'aéronefs sortie de chaîne et/ou par des essais dédiés sur des bancs d'essais.

En outre, une simulation thermique est réalisée pour établir le coefficient d'échange thermique du circuit d'air 5. On notera que le taux d'échange thermique dépend de la longueur des canaux entre la source d'air chaud secondaire 35 et la position de la sonde 31 de température, le diamètre des canaux, de leur niveau d'isolation s'ils en sont équipés et de la température extérieure à la tuyauterie.

Ces deux phases d'observations préliminaires ainsi que le coefficient d'échange thermique du circuit d'air permettent de fixer le seuil d'alerte S. A titre d'exemple, le seuil d'alerte S est une valeur sélectionnée entre environ 100°C et 150°C, par exemple 120°C.

Si la mesure standardisée courante de la température à la sortie de l'échangeur 17 est inférieure au seuil d'alerte S, alors on passe à l'étape E9 pour établir des pronostics sur l'état de l'échangeur.

Sinon, c'est-à-dire si la mesure standardisée courante de la température est supérieure au seuil d'alerte S, alors on passe à l'étape E8 où une alerte (par exemple, en forme de message) est transmise à un centre de maintenance avant d'aller à l'étape suivante E9.

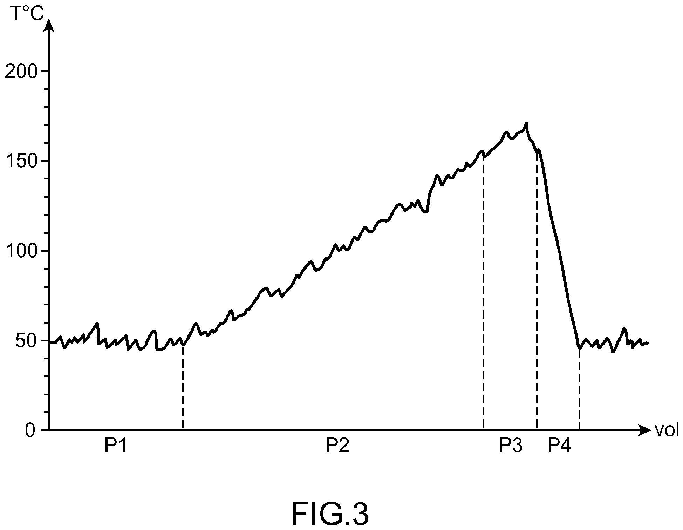

La [Fig. 3] est un graphe illustrant de manière schématique une courbe représentant le suivi de la température de l'air mesurée en aval de l'échangeur thermique, selon un mode de réalisation de l'invention.

L'axe des ordonnées du graphe représente les mesures de la température à la sortie d'un échangeur selon une échelle de 10° et l'axe des abscisses représente les dates ou périodes des vols durant lesquelles les mesures ont été relevées.

Ce graphe montre qu'au départ (période P1), la température mesurée en aval de l'échangeur 17 est d'environ 50° indiquant que l'échangeur thermique 17 est dans un très bon état. Avec le vieillissement de l'échangeur 17 au fur et à mesure des vols, la température augmente plus ou moins graduellement (période P2). On notera que l'augmentation de la température en aval de l'échangeur 17 est une indication d'une fuite dans le circuit d'air 5 et plus probablement au niveau de l'échangeur. Le graphe montre qu'à la période P3 la température dépasse légèrement le 150°C suivi par une période P4 de décroissance abrupte de la température qui diminue d'environ 100°C. Cette décroissance de la température est due à la dépose de l'échangeur 17 défectueux et son remplacement par un échangeur neuf.

A l'étape E7, le processeur 1 est configuré pour estimer le niveau de fuite et établir un pronostic de défaillance de l'échangeur thermique 17 par un apprentissage automatique basé sur un modèle de vieillissement construit préalablement. Ceci permet d'anticiper la dépose de l'échangeur. Cette dépose peut alors intervenir lors des phases d'arrêt programmées pour maintenance de l'aéronef sans aucun impact opérationnel pour la compagnie aérienne.

Le modèle de vieillissement est construit à partir des données d'observation qui sont disponibles lors de la phase de conception d'un échangeur thermique ainsi qu'à partir d'une série de données récoltées lors d'une phase préalable d'apprentissage issues d'une pluralité de vols d'une même flotte d'aéronefs.

Les algorithmes utilisés pour l'apprentissage automatique se fondent sur des approches statistiques connues pour l'homme du métier. Ces algorithmes permettent au processeur 9 d'apprendre de manière non supervisée à partir du modèle de vieillissement et de nouvelles mesures de températures en aval de l'échangeur 17.

En outre, le modèle de vieillissement peut être affiné par un retour sur les résultats et analyses de tests de fuite faites sur les échangeurs déposés dans les centres de maintenance.

Avantageusement, les représentations graphiques des températures mesurées, et/ou les niveaux de fuites et/ou les pronostics de défaillance sont visualisés sur l'interface d'affichage 15.

Par ailleurs, pour plus de sécurité, le système de surveillance 1 peut toujours comporter une boucle classique de détection de fuites d'air chaud autour des échangeurs air/air et des tuyaux d'air pressurisés comprenant des fils longeant les tuyaux du circuit d'air ainsi que des capteurs de détection de fuite disposés dans le circuit d'air. Dès lors qu'une fuite importante est détectée, la boucle de détection isole automatiquement la source d'air chaud pour prévenir tout dommage pour la structure de l'aéronef.

## Revendications

1. Procédé de surveillance de l'état d'un échangeur thermique (17) dans un circuit d'air (5) d'un aéronef (7), ledit échangeur thermique étant destiné à refroidir l'air extrait d'une source d'air chaud principale de l'aéronef, ledit procédé étant **caractérisé en ce qu'**il comporte les étapes suivantes :
- acquisition des mesures de température relevées par une sonde (31) disposée à une sortie dudit échangeur thermique (17), ladite acquisition étant réalisée lorsque le circuit d'air est alimenté par une source d'air chaud secondaire (35) en aval dudit échangeur thermique (17) et la source d'air chaud principale étant coupée,
- sélection d'une mesure de température pertinente parmi lesdites mesures de température, **ladite mesure de température pertinente étant représentative d'une phase de stabilisation comprise dans une période de temps d'observation prédéterminée,**
- comparer ladite mesure de température pertinente à un seuil d'alerte, et
- évaluer un niveau de fuite dans l'échangeur thermique en fonction de ladite comparaison.

2. Procédé selon la revendication 1, **caractérisé en ce que** ladite période de temps **d'observation prédéterminée** est déterminée par une analyse statistique sur une population d'aéronefs comportant des échangeurs thermiques présentant des fuites significatives.

3. Procédé selon la revendication 2, **caractérisé en ce que** la mesure de température pertinente est sélectionnée par un filtrage statistique, ledit filtrage statistique étant adapté pour sélectionner la mesure de température la plus représentative de ladite phase de stabilisation comprise dans ladite période de temps d'observation prédéterminée.

4. Procédé selon la revendication 2 ou 3, **caractérisé en ce que** ladite période de temps d'observation présente une durée entre environ 3 minutes et 10 minutes.

5. Procédé selon l'une quelconque des revendications précédentes, **caractérisé en ce qu'**il comporte une standardisation de ladite mesure de température pertinente avant de la comparer au seuil d'alerte, ladite standardisation étant réalisée en supprimant la dépendance de la mesure de température pertinente vis-à-vis du contexte extérieur.

6. Procédé selon la revendication 5, **caractérisé en ce que** le contexte extérieur est identifié par une mesure de la température d'air extérieure et une mesure de la température en sortie de la source d'air chaud secondaire.

7. Procédé selon l'une quelconque des revendications précédentes, **caractérisé en ce que** le seuil d'alerte est basé sur une valeur théorique de la température d'air à la sortie de l'échangeur thermique (17) estimée par un modèle thermique prédéterminé, ledit modèle thermique étant construit à partir d'une analyse statistique d'une série de mesures réelles de températures d'air à la sortie de chacun d'une pluralité d'échangeurs thermiques d'une flotte d'aéronefs ainsi que de températures correspondantes de l'air extérieur et des sources d'air chauds secondaires.

8. Procédé selon la revendication 7, **caractérisé en ce que** le seuil d'alerte est une valeur sélectionnée entre environ 100°C et 150°C.

9. Procédé selon l'une quelconque des revendications précédentes, **caractérisé en ce qu'**il comporte une estimation du niveau de fuite et un pronostic de défaillance de l'échangeur thermique (17) par un apprentissage automatique basé sur un modèle de vieillissement construit préalablement sur une série de données issues d'une pluralité de vols d'une même flotte d'aéronefs.

10. Procédé selon l'une quelconque des revendications précédentes, **caractérisé en ce que** la source d'air chaud secondaire (35) en aval dudit échangeur thermique (17) est un groupe auxiliaire de puissance APU.

11. Procédé selon l'une quelconque des revendications précédentes, **caractérisé en ce que** la sonde de température fait partie d'une boucle de contrôle destinée à réguler la température d'un mélange d'air frais et d'air chaud utilisée afin de maintenir une température d'air constante à la sortie de l'échangeur thermique.

12. Procédé selon l'une quelconque des revendications précédentes, **caractérisé en ce qu'**il comporte une visualisation des représentations graphiques des températures mesurées, et/ou des niveaux de fuites et/ou des pronostics de défaillance.

13. Système de surveillance de l'état d'un échangeur thermique (17) dans un circuit d'air (5) d'un aéronef (7), ledit échangeur thermique étant destiné à refroidir l'air extrait d'une source d'air chaud principale de l'aéronef, ledit système étant **caractérisé en ce qu'**il comporte :
- un module d'acquisition (11) configuré pour acquérir des mesures de température relevées par une sonde disposée à une sortie dudit échangeur thermique, ladite acquisition étant réalisée lorsque le circuit d'air est alimenté par une source d'air chaud secondaire en aval dudit échangeur thermique et la source d'air chaud principale étant coupée,
- un processeur (9) configuré pour sélectionner une mesure de température pertinente parmi lesdites mesures de température et pour détecter une éventuelle fuite dans l'échangeur thermique (17) en comparant la mesure de température pertinente à un seuil d'alerte prédéterminé, **ladite mesure de température pertinente étant représentative d'une phase de stabilisation comprise dans une période de temps d'observation prédéterminée.**

## Patentansprüche

1. Verfahren zum Überwachen des Zustands eines Wärmetauschers (17) in einem Luftkreislauf (5) eines Flugzeugs (7), wobei der Wärmetauscher dazu bestimmt ist, die aus einer Hauptheißluftquelle des Flugzeugs entnommene Luft zu kühlen, wobei das Verfahren **dadurch gekennzeichnet ist, dass** es die folgende Schritte umfasst:
- Erfassen von Temperaturmessungen, die von einer Sonde (31) festgestellt werden, die an einem Auslass des Wärmetauschers (17) angeordnet ist, wobei das Erfassen durchgeführt wird, wenn der Luftkreislauf von einer sekundären Heißluftquelle (35) stromabwärts des Wärmetauschers (17) versorgt wird, und die Hauptheißluftquelle abgeschaltet ist,
- Auswählen einer relevanten Temperaturmessung aus den Temperaturmessungen, wobei die relevante Temperaturmessung repräsentativ für eine Stabilisierungsphase ist, die in einem vorbestimmten Beobachtungszeitraum liegt,
- Vergleichen der relevanten Temperaturmessung mit einer Alarmschwelle, und
- Bewerten einer Leckagemenge im Wärmetauscher auf Grundlage des Vergleichs.

2. Verfahren nach Anspruch 1, **dadurch gekennzeichnet, dass** der vorbestimmte Beobachtungszeitraum durch eine statistische Analyse an einer Population von Flugzeugen bestimmt wird, die Wärmetauscher enthalten, die signifikante Leckagen aufweisen.

3. Verfahren nach Anspruch 2, **dadurch gekennzeichnet, dass** die relevante Temperaturmessung durch eine statistische Filterung ausgewählt wird, wobei die statistische Filterung angepasst ist, um die Temperaturmessung auszuwählen, die am repräsentativsten für die Stabilisierungsphase ist, die in dem vorbestimmten Beobachtungszeitraum liegt.

4. Verfahren nach Anspruch 2 oder 3, **dadurch gekennzeichnet, dass** der Beobachtungszeitraum eine Dauer zwischen etwa 3 Minuten und 10 Minuten aufweist.

5. Verfahren nach einem der vorhergehenden Ansprüche, **dadurch gekennzeichnet, dass** es eine Standardisierung der relevanten Temperaturmessung vor dem Vergleich mit der Alarmschwelle umfasst, wobei die Standardisierung durchgeführt wird, indem die Abhängigkeit der relevanten Temperaturmessung hinsichtlich des äußeren Kontexts beseitigt wird.

6. Verfahren nach Anspruch 5, **dadurch gekennzeichnet, dass** der äußere Kontext durch eine Messung der Außenlufttemperatur und eine Messung der Temperatur am Auslass der sekundären Heißluftquelle ermittelt wird.

7. Verfahren nach einem der vorhergehenden Ansprüche, **dadurch gekennzeichnet, dass** die Alarmschwelle auf einem theoretischen Wert der Lufttemperatur am Auslass des Wärmetauschers (17), der durch ein vorbestimmtes thermisches Modell geschätzt wird, basiert, wobei das thermische Modell aus einer statistischen Analyse einer Reihe tatsächlicher Messungen von Lufttemperaturen am Auslass jedes einer Vielzahl von Wärmetauschern einer Flugzeugflotte sowie entsprechenden Temperaturen der Außenluft und der sekundären Heißluftquellen aufgebaut ist.

8. Verfahren nach Anspruch 7, **dadurch gekennzeichnet, dass** die Alarmschwelle ein Wert ist, der zwischen ungefähr 100°C und 150°C ausgewählt wird.

9. Verfahren nach einem der vorhergehenden Ansprüche, **dadurch gekennzeichnet, dass** es eine Schätzung der Leckagemenge und eine Ausfallprognose des Wärmetauschers (17) durch maschinelles Lernen umfasst, das auf einem Modell des Alterns basiert, das zuvor auf einer Reihe von Daten aufgebaut wurde, die von einer Vielzahl von Flügen derselben Flugzeugflotte ausgegeben wurden.

10. Verfahren nach einem der vorhergehenden Ansprüche, **dadurch gekennzeichnet, dass** die sekundäre Heißluftquelle (35) stromabwärts des Wärmetauschers (17) eine Hilfsleistungsgruppe APU ist.

11. Verfahren nach einem der vorhergehenden Ansprüche, **dadurch gekennzeichnet, dass** die Temperatursonde Teil eines Regelkreises ist, der dazu bestimmt ist, die Temperatur eines Gemisches aus Frischluft und Heißluft zu regulieren, das verwendet wird, um eine konstante Lufttemperatur am Auslass des Wärmetauschers beizubehalten.

12. Verfahren nach einem der vorhergehenden Ansprüche, **dadurch gekennzeichnet, dass** es eine Visualisierung der grafischen Darstellungen der gemessenen Temperaturen und/oder der Leckagemengen und/oder der Ausfallprognosen umfasst.

13. System zum Überwachen des Zustands eines Wärmetauschers (17) in einem Luftkreislauf (5) eines Flugzeugs (7), wobei der Wärmetauscher dazu bestimmt ist, die aus einer Hauptheißluftquelle des Flugzeugs entnommene Luft zu kühlen, wobei das System **dadurch gekennzeichnet ist, dass** es Folgendes umfasst:
- ein Erfassungsmodul (11), das dazu konfiguriert ist, Temperaturmessungen zu erfassen, die von einer Sonde festgestellt werden, die an einem Auslass des Wärmetauschers angeordnet ist, wobei das Erfassen durchgeführt wird, wenn der Luftkreislauf von einer sekundären Heißluftquelle stromabwärts des Wärmetauschers versorgt wird, und die Hauptheißluftquelle abgeschaltet ist,
- einen Prozessor (9), der dazu konfiguriert ist, eine relevante Temperaturmessung aus den Temperaturmessungen auszuwählen und eine mögliche Leckage im Wärmetauscher (17) durch Vergleichen der relevanten Temperaturmessung mit einer vorbestimmten Alarmschwelle zu detektieren, wobei die relevante Temperaturmessung repräsentativ für eine Stabilisierungsphase ist, die in einem vorbestimmten Beobachtungszeitraum liegt.

## Claims

1. A method for monitoring the condition of a heat exchanger (17) in an air circuit (5) of an aircraft (7), said heat exchanger being for cooling air extracted from a primary hot air source of the aircraft, said method being **characterised in that** it comprises the following steps:
- acquiring temperature measurements made by a probe (31) disposed at an outlet of said heat exchanger (17), said acquiring being performed when the air circuit is fed by a secondary hot air source (35) downstream of said heat exchanger (17) and the primary hot air source being cut off,
- selecting a relevant temperature measurement from said temperature measurements, said relevant temperature measurement being representative of a stabilisation phase included in a predetermined observation time period,
- comparing said relevant temperature measurement with an alert threshold, and
- evaluating a leakage level in the heat exchanger based on said comparison.

2. The method according to claim 1, **characterised in that** said predetermined observation time period is determined by statistical analysis on a population of aircraft including heat exchangers with significant leaking.

3. The method according to claim 2, **characterised in that** the relevant temperature measurement is selected by statistical filtering, said statistical filtering being adapted to select the temperature measurement most representative of said stabilisation phase included in said predetermined observation time period.

4. The method according to claim 2 or 3, **characterised in that** said observation time period has a duration of between about 3 minutes and 10 minutes.

5. The method according to any one of the preceding claims, **characterised in that** it comprises standardising said relevant temperature measurement before comparing it with the alert threshold, said standardising being performed by removing the dependence of the relevant temperature measurement on the external context.

6. The method according to claim 5, **characterised in that** the external context is identified by measuring the external air temperature and measuring the temperature at the outlet of the secondary hot air source.

7. The method according to any one of the preceding claims, **characterised in that** the alert threshold is based on a theoretical value of the air temperature at the outlet of the heat exchanger (17) estimated by a predetermined thermal model, said thermal model being constructed from a statistical analysis of a series of actual measurements of air temperatures at the outlet of each of a plurality of heat exchangers of a fleet of aircraft as well as of corresponding temperatures of the external air and of the secondary hot air sources.

8. The method according to claim 7, **characterised in that** the alert threshold is a value selected between about 100°C and 150°C.

9. The method according to any one of the preceding claims, **characterised in that** it comprises estimating the leakage level and prognosticating failure of the heat exchanger (17) by machine learning based on an ageing model previously constructed on a series of data from a plurality of flights of a same fleet of aircraft.

10. The method according to any one of the preceding claims, **characterised in that** the secondary hot air source (35) downstream of said heat exchanger (17) is an Auxiliary Power Unit APU.

11. The method according to any one of the preceding claims, **characterised in that** the temperature probe is part of a control loop for regulating the temperature of a mixture of fresh air and hot air used to maintain a constant air temperature at the outlet of the heat exchanger.

12. The method according to any one of the preceding claims, **characterised in that** it comprises viewing graphical representations of the temperatures measured, and/or leakage levels and/or failure prognoses.

13. A system for monitoring the condition of a heat exchanger (17) in an air circuit (5) of an aircraft (7), said heat exchanger being for cooling air extracted from a primary hot air source of the aircraft, said system being **characterised in that** it comprises:
- an acquisition module (11) configured to acquire temperature measurements made by a probe disposed at an outlet of said heat exchanger, said acquisition being carried out when the air circuit is fed by a secondary hot air source downstream of said heat exchanger and the primary hot air source being cut off,
- a processor (9) configured to select a relevant temperature measurement from said temperature measurements and to detect a possible leak in the heat exchanger (17) by comparing the relevant temperature measurement with a predetermined alert threshold, said relevant temperature measurement being representative of a stabilisation phase included in a predetermined observation time period.
